# EUROPÄISCHE PATENTSCHRIFT

(11) **EP 2 230 489 B1**
(45) Veröffentlichungstag und Bekanntmachung des Hinweises auf die Patenterteilung: **13.09.2017**
(21) Anmeldenummer: 09004077.5
(22) Anmeldetag: 21.03.2009
(51) Int. Cl.: G01F 1/28, G01F 1/34

(54) **Drucksensor für Rückführgase von Verbrennungsmotoren**
Pressure sensor for exhaust gas recirculation systems of combustion motors
Capteur de pression pour un dispositif de recirculation de gaz d'échappement dans un moteur à combustion

(43) Veröffentlichungstag der Anmeldung: 22.09.2010
(73) Patentinhaber: HUBA CONTROL AG, 5436 Würenlos (CH)
(72) Erfinder: Hess, Jürg, CH-5607 Hägglingen (CH); Grimm, Mirko, CH-5412 Gebenstorf (CH)
(74) Vertreter: Maier, Daniel Oliver

(56) Entgegenhaltungen:
- DE-A1- 4 220 440
- DE-A1-102004 039 395
- DE-A1-102004 061 404
- DE-A1-102008 030 044
- DE-U1- 7 902 722
- DE-U1- 20 300 498
- DE-U1- 20 305 063
- GB-A- 830 211
- US-A- 4 186 602
- US-A- 5 436 795
- US-A1- 2002 059 797

## Beschreibung

Die vorliegende Erfindung betrifft einen Drucksensor für Rückführgase von Verbrennungsmotoren gemäss dem Patentanspruch 1 und ein Abgasrückführsystem mit einem solchen Sensor gemäss Patentanspruch 10.

Sensoren zur Messung von Drücken in Rückführ- bzw. Abgasen sind bekannte Vorrichtungen, die beispielsweise in Abgasrückführsystemen von mit Verbrennungsmotoren ausgestatteten Fahrzeugen eingesetzt werden. Die Abgasrückführsysteme leiten dabei zur Emissionsverringerung einen Teil der Abgase erneut einem Ansaugtrakt des Verbrennungsmotors zu.

Bei Druckmessungen in strömenden Medien, wie etwa den genannten Rückführgasen von Verbrennungsmotoren, können eine statische und eine dynamische Komponente des Drucks erfasst werden. Wie in der Praxis üblich werden diese Komponenten nachfolgend Betriebsdruck und Staudruck genannt. Aus einer Messung des Staudrucks kann auf die Geschwindigkeit des strömenden Mediums geschlossen werden.

Das Ziel der Messungen ist die Bestimmung des Massenstroms der Rückführgase durch Ermittlung der physikalischen Grössen Staudruck und Temperatur unter Berücksichtigung des gegebenen Strömungsquerschnitts.

Dokument GB 830 211 A offenbart ein Gerät zur Messung der Strömungsgeschwindigkeit von Flüssigkeiten und Gasen. Das Gerät weist ein Trägerelement auf, an welchem eine Biegeplatte aus Metall oder flexiblem Material wie Gummi befestigt ist, die sich bei Anströmung durch einen Gasstrom zu biegen vermag und die Dehungsmessstreifen trägt, welche dazu bestimmt sind, die Biegung der Biegeplatte in ein elektrisches Stausignal umzusetzen.

Dokument US 4 186 602 A offenbart einen Strömungssensor für die Steuerung von Verbrennungsmotoren. Der in einem Sensorgehäuse angeordnete Strömungssensor weist einen Turbinenrotor mit Turbinenschaufeln auf, welche bei Anströmung durch ein Gas auf Grund einer Drehimpulsänderung ausgelenkt werden. Die Auslenkung der Turbinenschaufeln ist proportional zur Dichte und Geschwindigkeit des Gases. Der Strömungssensor weist darüber hinaus einen separaten Temperaturfühler zur Messung der Temperatur des Gases und einen separaten Drucksensor zur Messung des Druckabfalls im Sensorgehäuse auf.

Dokument DE 203 05 063 U1 offenbart einen Sensor mit einem der Wirkung von Wirbel ausgesetzten plattenförmigen Sensorelement und mit einem Messaufnehmer zur Erzeugung eines elektrischen Signals in Abhängigkeit der Biegung des Sensorelementes, wobei das Sensorelement ein als Keramikplatte ausgebildeter Biegebalken ist, welcher elektronische Bauelemente trägt.

Ein Sensor zur Erfassung des Betriebsdrucks ist beispielsweise aus dem deutschen Gebrauchsmuster DE 20 2007 014 129 U bekannt. Dabei wird der Betriebsdruck einer in Abgase von Verbrennungsmotoren einzuspritzenden Harnstofflösung bestimmt. Der Sensor weist eine einseitig zu einem Reservoir geöffnete Messkammer auf, in welche ein aus keramischem Werkstoff gefertigter Messfühler zur Erfassung des Betriebsdrucks der darin befindlichen Harnstofflösung hineinragt. Damit übermässige Volumen- bzw. Druckänderungen in der Harnstofflösung nicht zu einer Zerstörung der Messkammer oder des Messfühlers führen, ist die Messkammer mit einem Kompensator in Form eines Edelstahlbalgs ausgestattet, der Belastungen durch eine Volumenänderung der Messkammer kompensiert.

Ein weiterer Drucksensor ist in der europäischen Patentanmeldung mit der Anmeldenummer EP 8004325.0 beschrieben. Der Drucksensor zur Bestimmung des Betriebsdruckes weist ein keramisches Trägerelement und eine daran befestigte Membran auf, die gemeinsam eine Messkammer begrenzen. Die durch eine Keramikplatte gebildete Membran vermag sich bei einer Druckbeaufschlagung durch ein Medium durchzubiegen. Die Durchbiegung wird durch Umsetzungsmittel in ein auswertbares, einer integralen Verstärkerelektronikschaltung zuleitbares, elektrisches Signal umgesetzt.

Auch im deutschen Gebrauchsmuster DE 203 00 498.1 U sowie in der US 5,436,795 A sind Drucksensoren zur Bestimmung des Betriebsdrucks offenbart.

Aufgabe der vorliegenden Erfindung ist es, eine Vorrichtung zur Erfassung des Staudrucks von Rückführgasen aus Verbrennungsmotoren bereitzustellen, diese kostengünstig herzustellen, robust und resistent gegen Einflüsse der Rückführgase und der Umwelt ist und kompakte Abmessungen aufweist.

Die Aufgabe wird durch den Gegenstand des Anspruchs 1 und des Anspruchs 10 gelöst. Besonders bevorzugte Ausführungsformen sind mit den in den abhängigen Ansprüchen angegebenen Merkmalen ausgestattet.

Der erfindungsgemässe Sensor für Rückführgase von Verbrennungsmotoren weist einen Staudruckmessgeber mit einem Trägerelement auf. Am Trägerelement ist eine Biegeplatte befestigt, die sich bei Anströmung durch die Rückführgase in Abhängigkeit von deren Staudruck zu biegen vermag. Die Biegeplatte ist mit Umsetzungsmitteln ausgestattet, welche dazu bestimmt sind, die Biegung der Biegeplatte in ein elektrisches Staudrucksignal umzusetzen. Dabei ist der erfindungsgemässe Drucksensor zusätzlich mit einem Betriebsdruckmessgeber ausgestattet. Der Betriebsdruckmessgeber weist eine Messkammer auf. Die Messkammer ist durch das Trägerelement, einem als Membran wirkenden Abschnitt der Biegeplatte und einem das Trägerelement mit der Biegeplatte verbindenden Verbindungsmittel gebildet. Die Membran vermag sich bei einer Druckbeaufschlagung durchzubiegen und trägt weitere Umsetzungsmittel, die dazu bestimmt sind, die Durchbiegung der Membran in ein elektrisches Betriebsdrucksignal umzusetzen. Der erfindungsgemässe Drucksensor besitzt einen vergleichsweise einfachen Aufbau und kann daher kostengünstig und in kompakter Bauform gefertigt werden.

Bei einer besonders bevorzugten Ausführungsform des erfindungsgemässen Drucksensors ist der Staudruckmessgeber zur Messung der Temperatur der Rückführgase zusätzlich mit einem Temperaturfühler ausgestattet. Der Temperaturfühler liefert ein elektrisches Signal, welches - wie auch das elektrische Staudrucksignal - einer Auswerteelektronik zur weiteren Verarbeitung zugeführt wird.

In einer weiteren besonders bevorzugten Ausführungsform des erfindungsgemässen Drucksensors sind die Biegeplatte und das Trägerelement durch Keramikplatten gebildet, deren Plattenflächenseiten im Wesentlichen rechtwinklig zu einer Strömungsrichtung der Rückführgase orientiert sind. Die Keramikplatten sind chemisch sehr beständig gegen das anströmende Medium und gewährleisten dadurch eine lange Lebensdauer sowie eine gute Langzeit-Reproduzierbarkeit von Messwerten. Die Keramikplatten können zudem kostengünstig gefertigt werden.

Zudem ist eine Anordnung des Staudruckmessgebers und des Betriebsdruckmessgebers auf einer gemeinsamen keramischen Plattenanordnung möglich. In diesem Fall bildet ein Teil der Biegeplatte gleichzeitig die Membran und es ist lediglich ein gemeinsames Trägerelement erforderlich. Um Störeinflüsse des Staudrucks des strömenden Mediums auf den Betriebsdruckmessgeber zu verhindern ist die Messkammer in einem sacklochartig einseitig verschlossenen, für das Medium zugänglichen, rohrförmigen Innenraum eines Anschlussflansches für den Drucksensor positioniert.

Nachfolgend wird eine besonders bevorzugte Ausführungsform des erfindungsgemässen Drucksensors anhand von Zeichnungen detailliert beschrieben. Es zeigen rein schematisch:
- Fig. 1: in einer Schnittdarstellung einen Längsschnitt durch eine Ausführungsform des nicht erfindungsgemässen Drucksensors, der mit einem Staudruckmessgeber sowie einem Betriebsdruckmessgeber ausgestattet und über einen Anschlussflansch an einem Rückführgase leitenden Rohrelement befestigt ist;
- Fig. 2: in einer Schnittdarstellung einen Querschnitt des in Fig. 1 gezeigten Drucksensors;
- Fig. 3: in einer Schnittdarstellung eine besonders bevorzugte Ausführungsform des erfindungsgemässen Drucksensors, bei dem der Staudruckmessgeber und der Betriebsdruckmessgeber gemeinsam auf einer keramischen Plattenanordnung angeordnet sind;
- Fig. 4: in einer Draufsicht eine Steckdose der in Fig. 3 gezeigten Ausführungsform des Drucksensors;
- Fig. 5: einen Längsschnitt durch einen Sensorkopf einschliesslich der mit Steckdosenkontakten ausgestatteten Steckdose der in Fig. 3 gezeigten, Ausführungsform des Drucksensors;
- Fig. 6: in einem Längsschnitt ein Verbindungs- und Halteelement für die in Fig. 3 dargestellte keramische Plattenanordnung;
- Fig. 7: in einer Draufsicht der anschlussseitige Endbereich des in Fig. 6 gezeigten Verbindungsund Halteelements mit Anschlusskontakten zur Herstellung von elektrischen Verbindungen zu einer internen Verstärkerelektronik;
- Fig. 8: in einer Draufsicht das in Fig. 6 und 7 gezeigte Verbindungs- und Halteelement mit der keramischen Plattenanordnung und einem die letztgenannte umgreifenden Dichtungsblech; und
- Fig. 9: in einer Schnittdarstellung einen Querschnitt durch das in Fig. 8 gezeigte Verbindungs- und Halteelement mit der keramischen Plattenanordnung und dem Dichtungsblech entlang der in Fig. 8 mit IX bezeichneten Schnittebene.

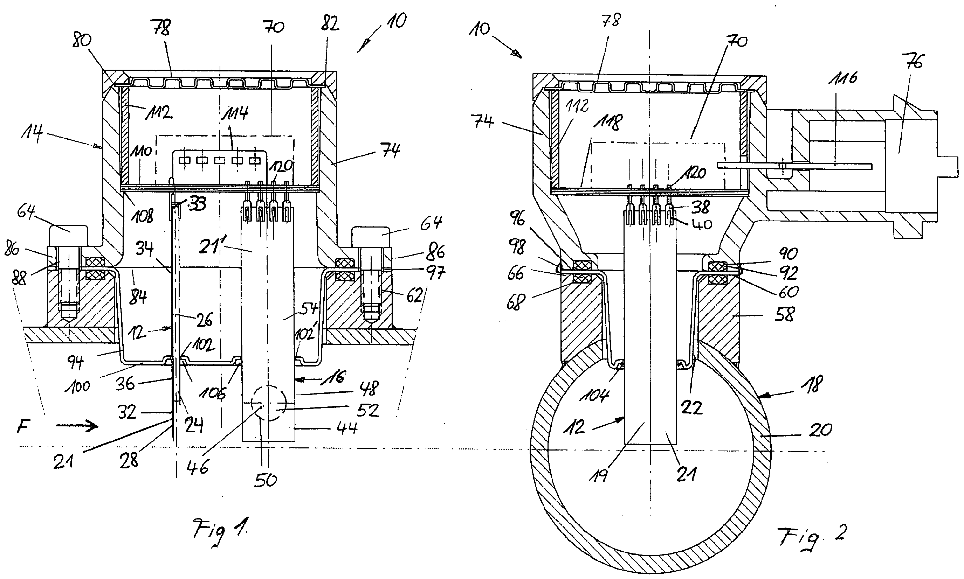

In den Figuren 1 und 2 ist eine Ausführungsform eines nicht erfindungsgemässen Drucksensors 10 dargestellt. Dabei ist ein Staudruckmessgeber 12 an einem Sensorkopf 14 des Drucksensors 10 angeordnet. Zusätzlich weist der Drucksensor 10 einen ebenfalls am Sensorkopf 14 befestigten Betriebsdruckmessgeber 16 auf.

Das bewegte Medium, ein Rückführgas, von welchem der Staudruck gemessen werden soll wird, ausgehend von einem hier nicht gezeigten Verbrennungsmotor, in einer Strömungsrichtung F durch ein Rohrelement 18 geleitet. Am Rohrelement 18 ragt der plattenförmige Staudruckmessgeber 12 des Drucksensors 10 mit seinem freien Endbereich, der einen drucksensitiven Bereich 19 aufweist, in das Rohrelement 18 hinein. Um Einflüsse auf die Druckmessung im Bereich der Wandung 20 des Rohrelements 18 zu vermeiden, reicht der drucksensitive Bereich 12 bis nahe an eine zentrale Rohrachse des Rohrelements 18 heran. Dabei ist eine Plattenflächenseite 21 des Staudruckmessgebers 12 rechtwinklig zur Strömungsrichtung F ausgerichtet, sodass dieser vom Rückführgas frontal angeströmt wird.

Der Staudruckmessgeber 12 und der Betriebsdruckmessgeber 16 ragen in das Rohrelement 18 durch eine Rohrelementöffnung 22 in der Wandung 20 des Rohrelements 18 hinein. Der Drucksensor 10 muss dabei so positioniert sein, dass der Staudrucksensor 12 mit seinem drucksensitiven Bereich 19 quer zur Strömungsrichtung F ausgerichtet ist.

Wie bereits erwähnt weist der Staudruckmessgeber 12 eine plättchenähnliche Grundform auf, wobei die Dicke in Relation zur Länge und Breite sehr gering ausfällt.

Als Basis für den Staudruckmessgeber 12 dient eine auf ein keramisches Trägerelement 24 mittels Glaslot 26 oder vergleichbaren Verbindungsmitteln befestigte keramische Biegeplatte 28. Die keramische Biegeplatte 28 überragt das Trägerelement 24 an seinem freien Ende derart, dass sich der drucksensitive Bereich 19 in Abhängigkeit von dem bei einer Anströmung durch die Rückführgase erzeugten Staudruck frei gegen das Trägerelement 24 in Strömungsrichtung F zu biegen vermag.

Die Biegeplatte 28 trägt in einem Übergangsbereich zwischen dem am Trägerelement 24 befestigten Endbereich und dem freiem Endbereich Umsetzungsmittel 32, welche dazu bestimmt sind, die Durchbiegung in ein elektrisches Signal zu wandeln, wobei sich das Signal in definierter Abhängigkeit zur Durchbiegung verändert. Vom statischen Druck innerhalb des Rohrelements 18 bleibt der Staudruckmessgeber 12 unberührt, da der drucksensitive Bereich der Biegeplatte 28 allseitig mit demselben statischen Druck beaufschlagt ist.

Die Umsetzungsmittel 32 sind im vorliegenden Fall im drucksensitiven Bereich 19, an der dem Trägerelement 24 abgewandten und bei Anströmung Dehnungskräften unterliegenden Plattenflächenseite 21 aufgebracht. Alternativ wären auch rückwärtige, auf der gestauchten Seite der Biegeplatte 28 angebrachte Umsetzungsmittel 32 denkbar. In einer bevorzugten nicht erfindungsgemässen Ausführungsform sind die Umsetzungsmittel 32 durch Dehnmessstreifen gebildet. Die Dehnmessstreifen sind in einem Siebdruckverfahren auf die Oberfläche der Biegeplatte 28 aufgebracht. Alternativ wäre auch die Verwendung piezoresistiver Elemente als Umsetzungsmittel 32 denkbar.

In einer besonders bevorzugten nicht erfindungsgemässen Ausführungsform ist der Staudruckmessgeber 12 zur Messung der Temperatur der Rückführgase zusätzlich mit einem Temperaturfühler ausgestattet, der vorteilhafter Weise an der Biegeplatte 28 angeordnet ist.

An seiner Stirnseite 33, welche im Sensorkopf 14 gelagert ist und das dem freien Endbereich gegenüberliegende Ende ausbildet, erfolgt ein Abgriff der Signale der Umsetzungsmittel 32.

Zur Signalübertragung werden Leiterbahnen 34 verwendet, welche ebenfalls mittels Siebdruck auf die Biegeplatte 28 aufgebracht sind. Die in Längsrichtung verlaufenden, nicht dargestellten Leiterbahnen 34 beginnen bei den Umsetzungsmitteln 32 und enden an der gegenüberliegenden Stirnseite 33.

Sowohl Umsetzungsmittel 32 als auch Leiterbahnen 34 sind gegen chemische Einwirkungen, verursacht durch die Rückführgase, beispielsweise mittels einer Glaslotdeckschicht 36 geschützt.

Am abgriffseitigen Ende des Staudruckmessgebers 12 wird die Verbindung durch stiftförmige Kontakte 38 sichergestellt, welche mit ihren zangenförmigen Enden 40 den Staudruckmessgeber 12 an der Stirnseite 33 umfassen und jeweils mit einer Leiterbahn 34 elektrisch leitend verbunden sind. Die Kontakte 38 sind zueinander parallel ausgerichtet und stehen rechtwinklig von der Stirnseite 33 ab. Ihr freies Ende ist stiftförmig ausgebildet.

Die Dimensionierung des Trägerelements 24 und der Biegeplatte 28 ist den herrschenden Verhältnissen im Rohrelement 18 individuell anpassbar. Der Staudruckmessgeber 12 erstreckt sich von der zentralen Rohrelementachse bis in das Innere des Sensorkopfes 14 hinein und wird dabei, wie bereits vorgängig erwähnt, ausschliesslich von diesem gehalten.

Ist der Drucksensor 10 wie in der vorliegend bevorzugten nicht erfindungsgemässen Ausführungsform um einen zusätzlichen Betriebsdruckmessgeber 16 ergänzt, so ist dessen Aufnahme im Inneren des Sensorkopfes 14 vergleichbar mit jener des Staudrucksensors 12. Auch seine räumliche Anordnung in Bezug auf das Rohrelement 18 ist vergleichbar mit jener des Staudrucksensors 12, allerdings mit dem Unterschied, dass er mit seiner Plattenflächenseite 21' parallel zur Strömungsrichtung F ausgerichtet ist, damit die Membran 46 keiner Anströmung des Mediums ausgesetzt ist, welche die statische Druckmessung beeinflussen würde.

Der Staudruckmessgeber 12 und der Betriebsdruckmessgeber 16 sind in Strömungsrichtung F platzsparend hintereinander angeordnet, wobei der Staudruckmessgeber 12 vor dem Betriebsdruckmessgeber 16 angeordnet ist, damit eine eventuelle Beeinflussung der Strömung und in Folge der Staudruckerfassung durch diesen von vornherein ausgeschlossen ist.

Beispielgebend für einen verwendeten Betriebsdruckmessgeber 16 dieser Art wird an dieser Stelle auf die Druckschrift EP 08 004 325.0 verwiesen.

Der Betriebsdruckmessgeber 16 weist eine plättchenähnliche, längliche Grundform auf, wobei die Dicke in Relation zur Länge und Breite sehr gering ausfällt. Basis ist ein weiteres Trägerelement 44.

Der Betriebsdruckmessgeber 16 besitzt eine keramische Membran 46, welche mit minimalem Abstand das gesamte Trägerelement 44 bündig überdeckt. Der zwischen den beiden Bauteilen bestehende Abstand ist durch das flächig aufgebrachte Verbindungsmittel, vorzugsweise durch weiteres Glaslot 48, gebildet. In jenem Endbereich, welcher der Achse des Rohrelements 18 zugewandt ist, befindet sich eine Stelle ohne Verbindungsmittel, wodurch ein Hohlraum, die sogenannte Messkammer 50, ausgebildet wird. Die Höhe der Messkammer 50 ist durch den durch das weitere Glaslot 48 gebildeten Abstand zwischen dem Trägerelement 44 und der Membran 46 definiert und ist in Abhängigkeit von der zu erwartenden Durchbiegung der Membran 46 zu dimensionieren. Zusätzlich kann das Trägerelement 44 im Bereich der Messkammer 50 vertieft sein, um im Bedarfsfall deren Höhe zu vergrössern.

Ist die Messkammer 50 evakuiert und aufgrund der Membran 46, des Trägerelements 44 und des weiteren Glaslots 48 allseitig dicht verschlossen, so ist der Betriebsdruck-messgeber 16 als ein Absolutdruckmessgeber ausgebildet.

In einer bevorzugten nicht erfindungsgemässen Ausführungsform bestehen auch hier weitere Umsetzungsmittel 52 aus piezoresistiven Elementen oder Dehnmessstreifen, die in einem Siebdruckverfahren auf die hohlraumseitige Oberfläche der Membran 46 aufgebracht werden und den Bereich der Messkammer 50 überdecken.

Die Signalübertragung erfolgt analog zum Staudruckmessgeber 12 über in Längsrichtung der Membran 46 verlaufende, nicht dargestellte Leiterbahnen 54, welche von den weiteren Umsetzungsmitteln 52 bis zu den Kontakten 38 an der Stirnseite 33 verlaufen.

Die keramische Membran 46 vermag sich bei Druckbeaufschlagung durch das Rückführgas im Bereich der Messkammer 50 mangels stützendem weiteren Glaslot 48 hohlraumseitig durchzubiegen, wodurch die dehnungsseitig aufgebrachten weiteren Umsetzungsmittel 52 entsprechend dieser Durchbiegung ein elektrisches Signal an die Leiterbahnen 54 abgeben.

Analog zum Staudruckmessgeber 12 sind beim Betriebsdruckmessgeber 16 die Dimensionierungen seiner einzelnen Bestandteile entsprechend den vorherrschenden Verhältnissen zu wählen.

Die Rohrelementöffnung 22 kann örtlich beliebig in der Wandung 20 angebracht sein, im vorliegenden Fall befindet sie sich, wie in den Figuren 1 und 2 dargestellt, an der vertikal obersten Stelle der Wandung 20 und weist eine längliche, sich in Längsrichtung des Rohrelements 18 erstreckende Form auf.

Die Rohrelementöffnung 22 ist an der Aussenseite der Wandung 20 des Rohrelements 18 von einem Anschlussflansch 58 umschlossen, vergleichbar einem Rohrstutzen, welcher gasdicht mit dem Rohrelement 18 beispielsweise durch Schweissung, Lötung oder Klebung verbunden ist und innenseitig mit dem Rand der Rohrelementöffnung 22 nahezu bündig abschliesst. Das freie Ende des Anschlussflansches 58 bildet eine plane Anschlussfläche 60 als Schnittstelle zum Drucksensor 10 aus. Die Aussenkontur der Anschlussfläche 60 folgt der Kontur des montierten Drucksensors 10.

Der Anschlussflansch 58 ist bezüglich seiner Längsausdehnung, welche die Hauptausrichtung darstellt, symmetrisch ausgebildet, wodurch zwei bezüglich einer Längssymmetrieebene symmetrische Hälften existieren. Der Anschlussflansch 58 ist so ausgerichtet, dass die zentrale Rohrachse in diese Längssymmetrieebene fällt. Der Anschlussflansch 58 besitzt weiters eine zu dieser Längssymmetrieebene rechtwinklig ausgerichtete Quersymmetrieebene. Die Anschlussfläche 60 ist rechtwinklig zu den beiden Symmetrieflächen ausgerichtet.

Zudem weist die Anschlussfläche 60 einander gegenüberliegende, in Hauptausrichtung des Rohrelements 18 positionierte und rechtwinklig zur Anschlussfläche 60 ausgerichtete Gewindebohrungen 62 auf. Diese dienen zur Befestigung des Drucksensors 10 am Anschlussflansch 58 mittels passender Schrauben 64 und bilden eine feste aber wieder lösbare Verbindung aus. Der Anschlussflansch 58 hat in seiner Anschlussfläche 60 nahe seiner Innenkontur eine, die Gewindebohrungen 62 nicht einschliessende, vollständig geschlossen umlaufende Nut 66 zur Aufnahme einer Dichtung 68, sodass eine gasdichte Abdichtung bei montiertem Drucksensor 10 gewährleistet ist.

Der Sensorkopf 14 erfüllt zudem die Aufgaben, die Rohrelementöffnung 22 am Anschlussflansch 58 dichtend zu verschliessen, eine Verstärkerelektronikschaltung 70 aufzunehmen und gegen Umgebungseinflüsse weitgehend abzuschirmen sowie eine genormte Schnittstelle für die Signalabgabe an externe Einrichtungen bereitzustellen. Das tragende Element des Sensorkopfes 14 bildet ein Gehäuse 74 mit quaderähnlicher Grundform. Dieses ist einteilig und aus thermoplastischem Kunststoff gefertigt, vorzugsweise durch Spritzgiessen hergestellt und behält seine Festigkeit bei für diese Anwendung typischen Temperaturen. Das Gehäuse 74 besitzt vier paarweise parallele Seiten, wobei das längere Paar parallel zur der Längssymmetriefläche der Rohrelementöffnung 22 ausgerichtet ist. Es hat an seiner Seite eine rechtwinklig angeformte Steckdose 76, welche im Bereich seiner Mündung normgemäss ausgebildet ist und dadurch eine Standardschnittstelle für Ausgangssignale darstellt.

Das Gehäuse 74 ist an seinem oberen und offenen Ende durch einen Deckel 78 aus einem metallischen Material, insbesondere Blech, begrenzt, welcher mittels eines oberhalb des Deckels angeordneten Verschlussrings 80 aus Kunststoff fixiert ist. Der Deckel 78 liegt mit seinem Randbereich am inneren Bereich der oberen Stirnfläche 82 des Gehäuses 74 an und wird vom Verschlussring 80 in einem planen Randbereich des Deckels 78 formschlüssig umfasst. Der Verschlussring 80 ist durch Verklebung oder Verschweissung an der oberen Stirnfläche 82 des Gehäuses 74 gesichert. Alternativ wäre auch ein Gewinde- oder Schnappmechanismus denkbar. Der Deckel 78 deckt die Stirnfläche 82 des Gehäuses 74 mit seinem planen Randbereich ab und dient als Schutz gegen das Eindringen von Feuchtigkeit und Schmutz sowie zur Abschirmung elektromagnetischer Einstrahlungen und weist zur verbesserten Wärmeabstrahlung eine strukturierte Oberfläche mit konzentrisch angeordneten Ringnuten auf.

Im Bereich einer umlaufenden unteren Gehäusestirnseite 84 sind an den kürzeren beiden Seiten desselben vis à vis voneinander zwei Flansche 86 ausgeformt. Sie sind Teil der Gehäusestirnseite 84 und weisen Durchgangsbohrungen 88 auf, welche in Position, Ausrichtung und Durchmesser zu den Gewindebohrungen 62 im Anschlussflansch 58 passen und mit diesen fluchten.

Ebenso enthält die Gehäusestirnseite 84 eine umlaufende Nut 90 für die Aufnahme einer weiteren Dichtung 92, bspw. eines O-Ringes, welche im montierten Zustand das Gehäuse 74 gasdicht verschliesst. Zweckmässigerweise gleicht diese Nut 90 in Ausführung und Form der Nut 66 des Anschlussflansches 58.

Als Teil des Sensorkopfes 14 ist zwischen Gehäuse 74 und Anschlussflansch 58 gehäuseunterseitig ein Dichtungsblech 94 angebracht, welches mit seiner Wannenform in den Anschlussflansch 58 hineinragt.

Das Dichtungsblech 94 ist an seiner offenen Seite umlaufend nach aussen abgewinkelt, sodass sich ein umlaufender Wannenrand 96 ausbildet, welcher plan ist. Die Aussenkontur des Wannenrandes 96 folgt der Kontur der Gehäusestirnseite 84 und in Folge der Kontur der Anschlussfläche 60 und weist ebenfalls entsprechende, fluchtende Bohrungen 97 auf. Zusätzlich weist der Wannenrand 96 - zumindest in Teilbereichen seines Umfangs - in Richtung des Gehäuses 74 gebogene Haltenasen 98 auf, welche die Aussenkontur des Gehäuses 74 im Bereich ihrer Gehäusestirnseite 84 nahezu spielfrei fassen und in Fig. 2 nur symbolhaft dargestellt sind. Diese dienen dazu, bei der Montage vor dem Einbringen der Schrauben 64 oder bei einer Handhabung des Drucksensors 10 ohne eingebrachte Schrauben 20 auftretende Scherbeanspruchungen vom Dichtungsblech 94 auf das Gehäuse 74 übertragen zu können.

Aus Figur 1 geht hervor, dass der Drucksensor 10 mittels den in die Gewindebohrungen 62 eingebrachten Schrauben 64 am Anschlussflansch 58 befestigt ist. Bei Verschraubung des Gehäuses 74 mit dem Anschlussflansch 58 wird auch das Dichtungsblech 94 mitverschraubt und zwischen der Dichtung 68 und der Dichtung 92 eingeklemmt. Sind die Dichtungen 68, 92, wie in Fig. 1 und Fig. 2 dargestellt, kongruent und übereinanderliegend ausgeführt, wird von vornherein ein Verformen des dünnwandigen Dichtungsbleches 94 durch den Anpressdruck der Verschraubung des Gehäuses 74 vermieden.

Im vorliegenden Fall ragt das Dichtungsblech 94 mit einem rohrelementseitigen Wannenboden 100 bis in das Rohrelement 18 hinein.

Der Staudruckmessgeber 12 und der Betriebsdruckmessgeber 16 durchgreifen das Dichtungsblech 94 im Bereich seines Wannenbodens 100. Hierzu sind je Messgeber 12, 16 passgenaue schlitzförmige Ausnehmungen 102, 102' vorgesehen, sodass der Wannenboden 100 als Positionierung und Abstützung für die Messgeber 12, 16 fungiert. Neben dieser Formschlüssigkeit erfolgt noch eine kraftschlüssige Fixierung in axialer Richtung, welche auch die Abdichtungsfunktion übernimmt und im vorliegenden Fall durch ein Kunststoffharz 104 oder eine keramische Verbundmasse bewirkt ist.

Die schlitzförmigen Ausnehmungen 102, 102' weisen entlang ihres Umfanges abgesetzte Vertiefungen 106, 106' in Richtung der Wanneninnenseite auf. In diese Vertiefungen 106, 106' wird an der Aussenseite des Sensorkopfes 14 das Kunststoffharz 104 eingebracht und so die Messgeber 12, 16 mit dem Dichtungsblech 94 dicht vergossen. Das Kunststoffharz 104 muss resistent gegenüber den auftretenden Temperaturen und Temperaturschwankungen, aggressiven chemischen Verbindungen in den Rückführgasen und auftretenden Drücken sein, flüssig aufgebracht werden können, nicht verspröden und gasdicht abschliessen.

Im Inneren des Sensorkopfes 14 befinden sich die Verstärkerelektronikschaltung 70, geschützt von Umwelteinflüssen sowie die Aufnahme der im Sensorkopf 14 befindlichen Enden der Messgeber 12, 16 mit den Kontakten 38.

Hierzu besitzt das Gehäuse 74 an seiner inneren Mantelfläche eine Stützschulter 108 ähnlich einem umlaufenden Vorsprung als Auflager, an welchem eine scheibenförmige Leiterplatte 110 entlang ihres Umfangs mit ihrer Unterseite spielfrei aufliegt und welche den Innenraum unterteilt, vergleichbar mit einem Zwischenboden.

Die Leiterplatte 110 wird mittels eines hülsenartigen Stützrings 112 vom Verschlussring 80 via Deckel 78 gegen die Stützschulter 108 gepresst. Der Stützring 112 liegt an der inneren Mantelfläche des Gehäuses 74 zwischen Leiterplatte 110 und Deckel 78 vollflächig und im Wesentlichen spielfrei an. Der Stützring 112 besitzt an einer Längsseite seiner Mantelfläche an jener Stelle, an der die Steckdose 76 aussen angeformt ist, eine Ausnehmung 114, sodass der Durchgriff von Steckdosenkontakten 116 der Steckdose 76 von ausserhalb des Gehäuses 74 oberhalb der Leiterplatte 110 problemlos ermöglicht ist. Vorteilhafterweise besteht der Stützring 112 aus Metall, wodurch in Verbindung mit dem Deckel 78 eine weitgehende elektromagnetische Abschirmung sowie eine verbesserte Wärmeabstrahlung ermöglicht ist.

An der dem Deckel 78 zugewandten Seite der Leiterplatte 110 sind die Verstärkerelektronikschaltung 70 sowie deren weiteren Leiterbahnen 118 aufgebracht. Diese sind zwecks Weiterleitung ihrer Ausgangssignale an die Steckdose 76 mit den durch die Öffnung 114 oberhalb der Leiterplatte 110 in das Gehäuse 74 hineinragenden Steckdosenkontakten 116 elektrisch verbunden. Zudem dient die Leiterplatte 110 der Aufnahme der stiftförmigen Kontakte 38 mittels entsprechender Bohrungen und Durchführung derselben bis an ihre Oberseite, wo die Kontakte 38 mit weiteren Leiterbahnen 118 verlötet sind, wodurch auch eine zuverlässige Signalweitergabe gewährleistet ist.

Zudem dient die Aufnahme und Verlötung der Kontakte 38 in der Leiterplatte 110 der weiteren Befestigung des Staudruckmessgebers 12 und des Betriebsdruckmessgebers 16 im Sensorkopf 14.

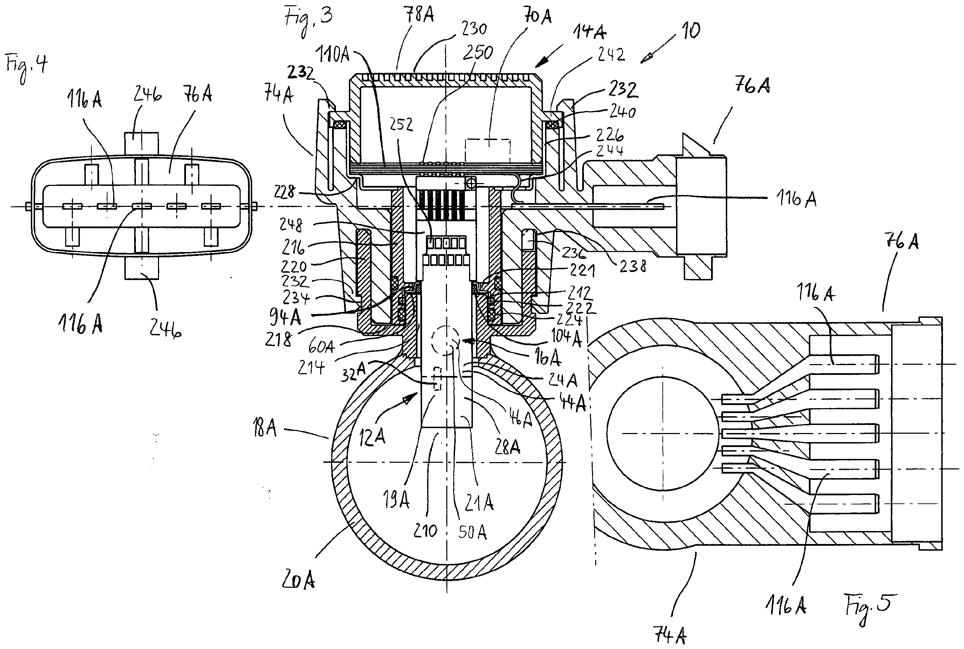

Im Zusammenhang mit den Fig. 3 - 9 wird nachfolgend eine besonders bevorzugte Ausführungsform des erfindungsgemässen Drucksensors 10 beschrieben. Dabei sind die Elemente mit gleicher Funktion, wie bei der vorgängig beschriebenen nicht erfindungsgemässen Ausführungsform, mit entsprechenden, um einen Suffix "A" ergänzten Bezugszeichen identifiziert.

Auch bei dieser besonders bevorzugten Ausführungsform ist ein Staudruckmessgeber 12A an einem Sensorkopf 14A des Drucksensors 10 angeordnet. Im

Unterschied zur nicht erfindungsgemässen Ausführungsform ist ein zusätzlicher Betriebsdruckmessgeber 16A gemeinsam mit dem Staudruckmessgeber 12A auf einer einzigen keramischen Plattenanordnung 210 vereinigt. Der Staudruckmessgeber 12A kann ebenfalls mit einem Temperaturfühler ausgestattet sein.

Wie auch bei der nicht erfindungsgemässen Ausführungsform wird das Medium entlang der Strömungsrichtung F durch ein Rohrelement 18A geleitet. Um eine Rohrelementöffnung 22A in der Wandung 20A des Rohrelements 18A ist ein Anschlussflansch 58A dicht an einer Aussenseite der Wandung 20A angeschweisst bzw. angeklebt. Im Gegensatz zur nicht erfindungsgemässen Ausführungsform ist der vom Rohrelement 18A abgewandte Endbereich des Anschlussflansches 58A zur Aufnahme eines Sensorkopfes 14A doppelwandig ausgebildet.

An einer vom Rohrelement 18A abgewandten Anschlussfläche 60A einer inneren Wandung 212 des Anschlussflansches 58A ist ein wannenförmiges Dichtungsblech 94A am Anschlussflansch 58A dicht gegen einen Eintritt des Mediums in den Drucksensor 10 angeschweisst bzw. angeklebt. Das Dichtungsblech 94A ist mit einer Ausnehmung 90A ausgestattet, durch welche die den Staudruckmessgeber 14A und den Betriebsdruckmessgeber 16A aufweisende keramische Plattenanordnung 210 aus dem Sensorkopf 14A durch den rohrförmigen Innenraum 214 des Anschlussflansches 58A in das Rohrelement 18A hineinragt. Die wannenförmige Vertiefung des Dichtungsblechs 94A ist zur Abdichtung eines Innenraums des Sensors 10 gegen das Eindringen des Mediums zwischen dem Dichtungsblech 94A und der keramischen Plattenanordnung 210 mit Kunststoffharz oder einer keramischen Verbundmasse aufgefüllt.

Die keramische Plattenanordnung 210 weist in Analogie zum Staudruckmessgeber 14 der nicht erfindungsgemässen Ausführungsform eine Biegeplatte 46A, die mittels einem Verbindungsmittel, insbesondere einem Glaslot 26A, an einem plattenförmigen Trägerelement 24A befestigt ist, auf. Genau wie bei der nicht erfindungsgemässen Ausführungsform überragt die keramische Biegeplatte 28A das Trägerelement 24A an seinem in das Rohrelement 18A hineinragenden freien Ende derart, dass sich ein drucksensitiver Bereich 19A in Abhängigkeit von dem bei einer Anströmung durch das Medium erzeugten Staudruck frei gegen das Trägerelement 24A in Strömungsrichtung F zu biegen vermag. Auch hier trägt die Biegeplatte 28A nah einem Übergang von einem noch am Trägerelement 24A befestigten Abschnitt zum freien Endbereich der Biegeplatte 28A Umsetzungsmittel 32A zur definierten Umsetzung der Durchbiegung der Biegeplatte 28A in ein elektrische Signal.

Für eine Miniaturisierung des Drucksensors 10 und zur Einsparung einer weiteren Plattenanordnung ist der Betriebsdruckmessgeber 16A unmittelbar auf der keramischen Plattenanordnung 210 integriert. Zu diesem Zweck fungiert ein Abschnitt der Biegeplatte 28A auch als keramische Membran 46A für den Betriebsdruckmessgeber 16A. Dabei ist ein Verbindungsmittel, vorzugsweise weiteres Glaslot 48A, zwischen dem Trägerelement 44A und der Membran 46A zur Bildung einer Messkammer 50A aufgebracht. Die Höhe der hohlraumartigen Messkammer 50A ist durch die Dicke des ausserhalb der Messkammer 50A aufgebrachten Schicht aus Verbindungsmitteln, vorzugsweise Glaslot 48A, zwischen dem Trägerelement 44A und der Membran 46A definiert. Wie auch in diesem Zusammenhang bei der nicht erfindungsgemässen Ausführungsform erwähnt, kann zusätzlich das Trägerelement44A im Bereich der Messkammer 50A mit einer Vertiefung ausgestattet sein, um so die Höhe der Messkammer 50A zu vergrössern. Auf der hohlraumseitigen Oberfläche der Membran 46A sind weitere Umsetzungsmittel 52A, ebenfalls beispielsweise in Form vom piezoresistiven Elementen oder Dehnmessstreifen aufgebracht, um eine Durchbiegung der Membran 46A in Abhängigkeit vom Betriebsdruck des Mediums in ein elektrisches Signal umzusetzen. Um den Einfluss durch die Strömung des Mediums und der Biegung der Biegeplatte 28A zu minimieren, ist die Messkammer 50A im durch das Dichtungsblech 94A sacklochartig verschlossenen Innenraum 214 des Aufnahmeflansches 58A, in ausreichender Entfernung vom biegesensitiven Bereich 19A angeordnet.

Vom Anschlussflansch 58A ausgehend erhebt sich radial aussen entlang der inneren Wandung des Anschlussflansches 58A ein metallisches Abstands- und Kontaktelement 216. Anschlussflanschseitig ist dieses im Wesentlichen zylinderförmige Abstands- und Kontaktelement 216 einerseits auf einem Anschlussflanschboden 218 des Anschlussflansches 58A zwischen der inneren Wandung 212 und einer äusseren Wandung 220 des sensorkopfseitigen Endbereichs des Anschlussflansches 56A und mittels einer radial umlaufenden, nach innen gerichteten Schulter 221, auf der der Anschlussfläche 60A gegenüberliegenden Seite des Dichtungsblechs 94A abgestützt. Zwischen diesen beiden rohrelementseitigen Abstützungen sind radial innen am metallischen Abstands- und Kontaktelement 216 eine umlaufenden Kontaktnut 222 und eine Dichtungsnut 224 ausgeformt. In die Kontaktnut 222 ist ein metallischer Federring eingelegt, der eine elektrisch leitende Verbindung zwischen dem metallischen Abstands- und Kontaktelement 216 und dem Anschlussflansch 58A herstellt. In die Dichtungsnut 224 ist ein konventioneller Dichtungsring aufgenommen, der das Eindringen von Feuchtigkeit und Schmutz in das Innere des Sensorkopfes 14A verhindern soll.

Sensorkopfseitig ist das metallische Abstands- und Kontaktelement 216 an einem wannenartigen Abschirmblech 226 angeschweisst und somit elektrisch mit ihm verbunden. Das Abschirmblech 226 ist im Inneren des Gehäuses 74A des Sensorkopfes 14A positioniert und umfasst eine Leiterplatte 110A mit einer Verstärkerelektronikschaltung 70A. Das Abschirmblech 226 weist radial aussen eine Stufenaufnahme 228 für die Auflage der Leiterplatte 110 auf. Die Leiterplatte 110A ist in ihrem mit der Stufenaufnahme 228 zusammenwirkenden Auflagebereich beidseitig mit untereinander elektrisch verbundenen metallischen Leiterbahnen ausgestattet, die neben der rohrelementseitigen Kontaktierung mit der Stufenaufnahme 228 des Abschirmblechs 226 auch zur Kontaktierung mit einem der Stufenaufnahme 228 gegenüberliegenden metallischen Deckel 78A dient.

Der Deckel 78A ist topfartig ausgeformt und weist auf seiner nach aussen gerichteten Oberfläche konzentrisch angeordnete Ringnuten 230 auf. Diese Ringnuten 230 vergrössern die Oberfläche des Deckels 78A und dienen der verbesserten Abstrahlung von Wärme. Gleichzeitig verschliesst der Deckel 78A einen wenigstens nahezu vollständig geschlossenen Faradayschen Käfig, der aus besagtem metallischen Deckel 78A, dem Abschirmblech 226, dem metallischen Abstands- und Kontaktelement 216 und dem Dichtungsblech 94A gebildet wird. Der Faradaysche Käfig bewirkt eine Sicherstellung der elektromagnetischen Verträglichkeit (EMV) für die darin eingeschlossene Verstärkerelektronikschaltung 70A.

Das Gehäuse 74A des Sensorkopfes 14A ist im Wesentlichen muffenartig und sowohl in seinem rohrelementseitigen Endbereich als auch an seinem deckelseitigen Endbereich doppelwandig ausgebildet. Die jeweils äusseren Wandungen sind abschnittsweise unterbrochen und zu Schnappfingern 232 geformt. Rohrelementseitig erstreckt sich eine innere Wandung des Gehäuses 74A zwischen der radial äusseren Oberfläche des metallischen Abstands- und Kontaktelements 216 und einer inneren Oberfläche der äusseren Wandung des Anschlussflansches 58A. Die rohrelementseitigen Schnappfinger 232 des Gehäuses 74A greifen zur Befestigung desselben formschlüssig in entsprechende Schnappnuten 234, die an einer radial äusseren Seite der äusseren Wandung des Anschlussflansches 58A ausgebildet sind, ein. Dabei gilt anzumerken, dass das Gehäuse 74A zwischen seiner rohrelementseitig radial inneren und radial äusseren Wandung mit einer nasenartigen Verdrehsicherung 236 ausgestattet ist, die in eine entsprechende Aussparung 238 der äusseren Wandung des Anschlussflansches 58A eingreift. Das Zusammenwirken von Verdrehsicherung 236 und Aussparung 238 gewährleistet eine optimale und sichere Positionierung des Sensorkopfes 14A.

Deckelseitig dient eine innere Wandung des Gehäuses 74A einer mittels eines stirnseitig angeordneten Dichtungsrings 240 abgedichteten Auflage für einen radial nach aussen hervorstehenden Deckelrand 242 des Deckels 78A. Auf der dem Dichtungsring 240 gegenüberliegenden Seite wird der Deckelrand 242 zur Befestigung des Deckels 78A am Gehäuse 74A durch die Schnappfinger 232 übergriffen.

Radial nach aussen hervorstehend ist am Gehäuse 74A eine bereits im Zusammenhang mit der nicht erfindungsgemässen Ausführungsform beschriebene Steckdose 76A ausgeformt. Diese Steckdose 76A bildet auch hier eine Standardschnittstelle für die Ausgangssignale bzw. dient der elektrischen Speisung des Drucksensors 10. Bei der zweiten Ausführungsform sind die elektrischen Kontaktierungen zwischen der Leiterplatte 110A und den Steckdosenkontakten 116A in deren gehäuseinnenraumseitigen Endbereichen über Federkontakte 244 bewirkt. Diese Federkontakte 244 sind leiterplattenseitig befestigt. Eine Draufsicht auf die Steckdose 76A mit ihren fünf Steckdosenkontakten 116 ist in Fig. 4 gezeigt. Eine sichere Befestigung eines entsprechend genormten Steckers in der Steckdose 76A wird steckdosenseitig durch entsprechend ausgeformte Sicherungsnasen 246 gewährleistet.

In Fig. 5 ist ein Schnitt durch einen Teil des Gehäuses 74A mit der Steckdose 76A auf der Höhe der Steckdosenkontakte 116 gezeigt. Wie dieser Schnittdarstellung zu entnehmen ist, sind die Steckdosenkontakte 116A so ausgelegt, dass ihre Teilung und Breite auf der Aussenseite dem Standardstecker entsprechen und an der Innenseite der Teilung der Federkontakte 244 angepasst sind. Zudem verengt sich ihr Querschnitt ausgehend von den externen Endbereichen zu ihren federkontaktseitigen Endbereichen.

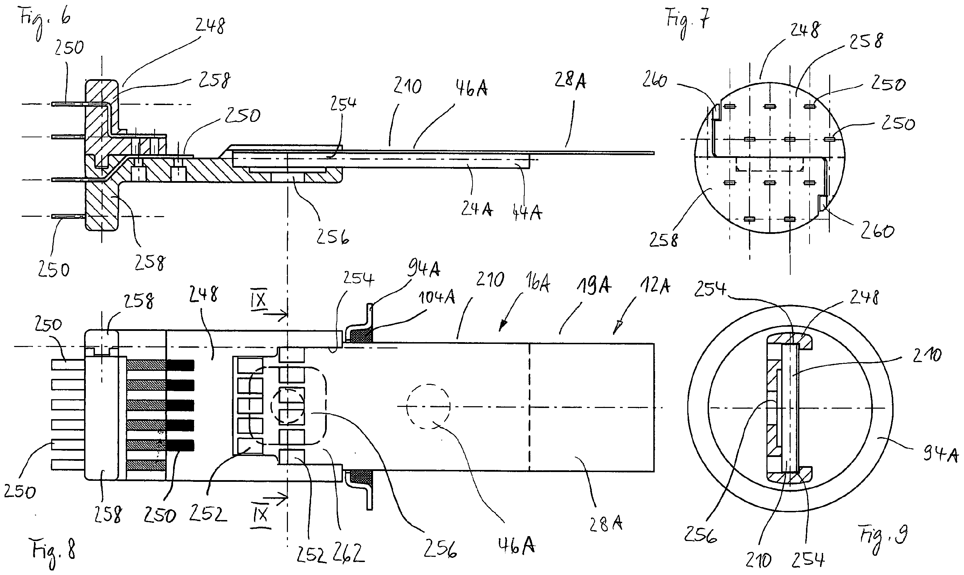

In den Figuren 6 bis 9 ist ein Verbindungs- und Halteelement 248 zusammen mit der keramischen Plattenanordnung 210, auf welcher der Staudruckmessgeber 12A und der Betriebsdruckmessgeber 16A vereinigt sind, dargestellt. Das Verbindungs- und Halteelement 248 ist zweiteilig ausgebildet, vorzugsweise aus einem Kunststoff hergestellt und dient neben der sensorkopfseitigen Halterung der keramischen Plattenanordnung 210 auch der Halterung von elektrischen Anschlusskontakten 250 zum Herstellen einer elektrischen Verbindung zwischen einerseits dem Staudruckmessgeber 12A und dem Betriebsdruckmessgeber 16A und andererseits der Verstärkerelektronikschaltung 70A auf der Leiterplatte 110A. Die Anschlusskontakte 250 durchgreifen in montiertem, beispielsweise in Fig. 3 gezeigtem Zustand entsprechende Bohrungen in der Leiterplatte 110A und sind ein- bzw. beidseitig an zugeordneten Lötaugen verlötet. Plattenanordnungsseitig sind die Anschlusskontakte 250 durch nicht gezeigte Bondingdrähte mit entsprechenden Kontaktflächen 252 auf der äusseren Seite der Biegeplatte 28A bzw. Membran 46A elektrisch verbunden. Die Kontaktflächen 252 wiederum stehen durch nicht gezeigte Leiterbahnen mit den Umsetzungsmitteln 32A, 52A in elektrischem Kontakt.

Die keramische Plattenanordnung 210 ist zu ihrer Halterung in einer entsprechend ausgeformten Aufnahmenut 254 des Verbindungs- und Halteelements 248 eingeführt. Zur Fixierung ist eine trägerelementseitige Halteelementausnehmung 256 mit einem nicht gezeigten Klebstoff aufgefüllt.

Wie Fig. 7 zu entnehmen ist, sind die zwei Halteelementeile 258 des Verbindungs- und Haltelements 248 formschlüssig durch jeweils das andere Element umgreifende Haltenasen 260 fest miteinander verbunden.

Wie in den Figuren 8 und 9 gezeigt, ist das Verbindungs- und Halteelement 248 biegeplatten- bzw. membranseitig mit einer Fensterausnehmung 262 ausgestattet, welche einen Zugang zu den Kontaktflächen 252 auf der Biegeplatte 28A bzw. Membran 46A beispielsweise zum Kontaktieren der nicht gezeigten Bondingdrähte ermöglicht. In Fig. 8 ist zudem das Dichtungsblech 94A sowie das zu Dichtungszwecken vorgängig eingegossene und anschliessend ausgehärtete Kunststoffharz 104A dargestellt.

Wie schon vorher erwähnt, kann am Trägerelement 24, 24A und weiteren Trägerelement 44 der beiden Ausführungsformen des Drucksensors 10 zusätzlich ein Temperaturfühler bzw. - sensor zur Bestimmung der Temperatur des Mediums angeordnet sein. Von diesem Temperatursensor generierte elektrische Signale werden über entsprechende Leiterbahnen auf dem Trägerelement 24, 24A bzw. weiteren Trägerelement 44 zur Verstärkerelektronikschaltung 70, 70A geführt, gegebenenfalls dort verarbeitet und falls benötigt an den Steckdosenkontakten 116, 116A für einen externen Abgriff bereitgestellt.

Naturgemäss lässt sich ein Drucksensor 10 der vorliegenden Art auch für andere Medien verwenden, beispielweise Flüssigkeiten, und die zugehörigen Umsetzungsmittel 32, 52, 32A, 52A lassen sich den spezifischen Verhältnissen anpassen. Zudem sind Drucksensoren 10 dieser Art in der Massenfertigung kostengünstig und mit wiederholbar hoher Genauigkeit herstellbar.

## Patentansprüche

1. Drucksensor für Rückführgase von Verbrennungsmotoren, aufweisend einen Staudruckmessgeber (12A) mit einem Trägerelement (24A), an welchem eine Biegeplatte (28A) befestigt ist, die sich bei Anströmung durch die Rückführgase in Abhängigkeit von deren Staudruck zu biegen vermag und die Umsetzungsmittel (32A) trägt, welche dazu bestimmt sind, die Biegung der Biegeplatte (28A) in ein elektrisches Staudrucksignal umzusetzen, **gekennzeichnet durch** einen zusätzlichen Betriebsdruckmessgeber (16A) mit einer Messkammer (50A), die durch das Trägerelement (24A), einen als Membran (46A) wirkenden Abschnitt der Biegeplatte (28A) und ein das Trägerelement (24A) mit der Biegeplatte (28A) verbindendes Verbindungsmittel gebildet ist, wobei sich die Membran (46A) bei einer Druckbeaufschlagung durchzubiegen vermag und weitere Umsetzungsmittel (52A) trägt, die dazu bestimmt sind, die Durchbiegung der Membran (46A) in ein elektrisches Betriebsdrucksignal umzusetzen.

2. Drucksensor gemäss Anspruch 1, **dadurch gekennzeichnet, dass** das Verbindungsmittel ein Glaslot (48A) ist.

3. Drucksensor gemäss Anspruch 1 oder 2, **gekennzeichnet durch** einen am Staudruckmessgeber (12A) angeordneten Temperaturfühler zur Messung der Temperatur der Rückführgase.

4. Drucksensor gemäss einem der Ansprüche 1 bis 3, **dadurch gekennzeichnet, dass** die Biegeplatte (28A) und / oder das Trägerelement (24A) durch eine Keramikplatte bzw. Keramikplatten gebildet ist bzw. sind, deren Plattenflächenseite (21A) bzw. Plattenflächenseiten (21A) wenigstens nahezu rechtwinklig zu einer Strömungsrichtung (F) der Rückführgase orientiert ist bzw. sind.

5. Drucksensor gemäss einem der Ansprüche 1 bis 4, **dadurch gekennzeichnet, dass** die Messkammer (50A) in einem mit Rückführgasen gefüllten sacklochartigen Innenraum (214) platziert ist.

6. Drucksensor gemäss einem der Ansprüche 1 bis 5, **dadurch gekennzeichnet, dass** eine das Trägerelement (24A) und die Biegeplatte (28A) umfassende keramische Plattenanordnung (210) einseitig in einem Verbindungs- und Halteelement (248) aufgenommen und befestigt ist, wobei das Verbindungs- und Halteelement (248) mittels von ihm getragenen Anschlusskontakten (250) an einer im Inneren des Drucksensors (10) angeordneten Leiterplatte (110A) fixiert ist.

7. Drucksensor gemäss einem der Ansprüche 1 bis 6, **dadurch gekennzeichnet, dass** die Messkammer (50A) evakuiert und allseitig dicht verschlossen ist, um den Betriebsdruckmessgeber (16A) als ein Absolutdruckmessgeber auszubilden.

8. Drucksensor gemäss einem der Ansprüche 1 bis 7, **dadurch gekennzeichnet, dass** die Biegeplatte (28A) mittels Glaslot (26A) am Trägerelement (24A) befestigt ist und über dieses frei hinausragt.

9. Drucksensor gemäss einem der Ansprüche 1 bis 8, **dadurch gekennzeichnet, dass** die Umsetzungsmittel (32A) und die weiteren Umsetzungsmittel (52A) durch piezoresistive Elemente gebildet sind, die gegebenenfalls durch eine Schicht aus Glaslot (36, 26A, 48A) geschützt sind.

10. Abgasrückführsystem mit einem Drucksensor gemäss einem der Ansprüche 1 bis 9, **dadurch gekennzeichnet, dass** der Staudruckmessgeber (12A) und der Betriebsdruckmessgeber (16A) eine Ausnehmung (102A) in einem wannenförmigen Dichtungsblech (94A) durchgreifend in ein die Rückführgasse leitendes Rohrelement (18A) hineinragen, wobei die Ausnehmung (102A) mittels Kunststoffharz (104A) oder eine keramische Verbundmasse dicht vergossen ist und das wannenförmige Dichtungsblech (94A) eine wandungsseitige Rohrelementöffnung (22A) im Rohrelement (18A) durch dichtende Auflage auf einem die Rohrelementöffnung (22A) aussenseitig umstehenden Anschlussflansch (58A) verschliesst.

11. Abgasrückführsystem gemäss Anspruch 10, **gekennzeichnet durch** ein dicht auf den Anschlussflansch (58A) aufgesetztes, gegenüberliegend dem wannenförmigen Dichtungsblech (94A) angeordnetes Gehäuse (74A), welches gegenüberliegend dem Anschlussflansch (58A) durch einen vorzugsweise aus Metall geformten Deckel (78A) dicht verschlossen ist.

12. Abgasrückführsystem gemäss Anspruch 11, **dadurch gekennzeichnet, dass** eine Verstärkerelektronikschaltung (70A) zur Verarbeitung des Staudrucksignals und des Betriebsdrucksignals im Gehäuse (74A) zwischen dem wannenförmigen Dichtungsblech (94A) und dem Deckel (78A) angeordnet ist.

13. Abgasrückführsystem gemäss Anspruch 12, **dadurch gekennzeichnet, dass** auf der Biegeplatte (28A) und auf der Membran (50A) Leiterbahnen (54) zur Übertragung des Staudrucksignals von den Umsetzungsmitteln (32A) und des Betriebsdrucksignals von den weiteren Umsetzungsmitteln (52A) zur Verstärkerelektronikschaltung (70A) angeordnet sind.

14. Abgasrückführsystem gemäss Anspruch 12 oder 13, **dadurch gekennzeichnet, dass** das Gehäuse (74A) eine Steckdose (76A) mit Steckdosenkontakten (116A) aufweist, wobei die Steckdosenkontakte (116A) elektrisch mit der Verstärkerelektronikschaltung (70A) verbunden sind und Ausgangssignale in Abhängigkeit vom Staudrucksignal und vom Betriebsdrucksignal bereitstellen können.

## Claims

1. Pressure sensor for exhaust recirculation gases of internal combustion engines, comprising a back pressure measuring encoder (12A) with a support element (24A), on which is secured a bending plate (28A), which is able to bend when subjected to a flow of exhaust recirculation gases in dependence on their back pressure, and which carries conversion means (32A) which are designed to convert the flexure of the bending plate (28A) into an electric back pressure signal, **characterized by** an additional operating pressure measuring encoder (16A) with a measuring chamber (50A), which is formed by the support element (24A), a section of the bending plate (28A) acting as a membrane (46A), and a connection means joining the support element (24A) to the bending plate (28A), wherein the membrane (46A) is able to bend when subjected to pressure and carries further conversion means (52A) which are designed to convert the flexure of the membrane (46A) into an electric operating pressure signal.

2. Pressure sensor according to Claim 1, **characterized in that** the connection means is a glass solder (48A).

3. Pressure sensor according to Claim 1 or 2, **characterized by** a temperature sensor arranged on the back pressure measuring encoder (12A) for measuring the temperature of the exhaust recirculation gases.

4. Pressure sensor according to one of Claims 1 to 3, **characterized in that** the bending plate (28A) and / or the support element (24A) is/are formed by a ceramic plate or ceramic plates, whose plate surface side (21A) or plate surface sides (21A) is/are oriented at least almost at right angles to a flow direction (F) of the exhaust recirculation gases.

5. Pressure sensor according to one of Claims 1 to 4, **characterized in that** the measuring chamber (50A) is placed in an interior space (214) resembling a blind hole and filled with exhaust recirculation gases.

6. Pressure sensor according to one of Claims 1 to 5, **characterized in that** a ceramic plate arrangement (210) comprising the support element (24A) and the bending plate (28A) is accommodated and secured at one side in a connecting and holding element (248), while the connecting and holding element (248) is fixed by means of connection contacts (250) carried by it on a printed circuit board (110A) arranged in the interior of the pressure sensor (10).

7. Pressure sensor according to one of Claims 1 to 6, **characterized in that** the measuring chamber (50A) is evacuated and tightly sealed all around, in order to form the operating pressure measuring encoder (16A) as an absolute pressure measuring encoder.

8. Pressure sensor according to one of Claims 1 to 7, **characterized in that** the bending plate (28A) is fastened by means of glass solder (26A) on the support element (24A) and extends freely beyond it.

9. Pressure sensor according to one of Claims 1 to 8, **characterized in that** the conversion means (32A) and the additional conversion means (52A) are formed by piezoresistive elements which are optionally protected by a layer of glass solder (36, 26A, 48A).

10. Exhaust gas recirculation system with a pressure sensor according to one of Claims 1 to 9, **characterized in that** the back pressure measuring encoder (12A) and the operating pressure measuring encoder (16A) protrude through a recess (102A) in a trough-shaped sealing sheet (94A) into a pipe element (18A) carrying the recirculation gases, the recess (102A) being tightly sealed by means of synthetic resin (104A) or a ceramic casting compound, and the trough-shaped sealing sheet (94A) closing a wall-side pipe element opening (22A) in the pipe element (18A) by tight bearing against a connection flange (58A) encircling the pipe element opening (22A) on the outside.

11. Exhaust gas recirculation system according to Claim 10, **characterized by** a housing (74A), placed tightly against the connection flange (58A), arranged opposite the trough-shaped sealing sheet (94A), which is tightly closed opposite the connection flange (58A) by a cover (78A) preferably made of metal.

12. Exhaust gas recirculation system according to Claim 11, **characterized in that** an amplifier electronic circuit (70A) for processing of the back pressure signal and the operating pressure signal is arranged in the housing (74A) between the trough-shaped sealing sheet (94A) and the cover (78A).

13. Exhaust gas recirculation system according to Claim 12, **characterized in that** conductor tracks (54) for transmission of the back pressure signal from the conversion means (32A) and the operating pressure signal from the additional conversion means (52A) to the amplifier electronic circuit (70A) are arranged on the bending plate (28A) and on the membrane (50A).

14. Exhaust gas recirculation system according to Claim 12 or 13, **characterized in that** the housing (74A) comprises a socket (76A) with socket contacts (116A), wherein the socket contacts (116A) are electrically connected to the amplifier electronic circuit (70A) and can provide output signals in dependence on the back pressure signal and the operating pressure signal.

## Revendications

1. Capteur de pression pour gaz recyclés de moteurs à combustion, présentant un capteur de mesure de pression dynamique (12A) avec un élément de support (24A) sur lequel est fixée une plaque de flexion (28A) qui, lors de l'arrivée du flux des gaz recyclés, peut fléchir en fonction de leur pression dynamique et qui porte des moyens de conversion (32A) qui sont destinés à convertir la courbure de la plaque de flexion (28A) en un signal électrique de pression dynamique, **caractérisé par** un capteur de mesure de pression de service (16A) supplémentaire avec une chambre de mesure (50A) qui est formée de l'élément de support (24A), d'un tronçon de la plaque de flexion (28A) agissant en tant que membrane (46A) et d'un moyen de raccordement raccordant l'élément de support (24A) à la plaque de flexion (28A), la membrane (46A) pouvant fléchir lorsqu'elle est exposée à une pression et portant d'autres moyens de conversion (52A) qui sont destinés à convertir la flexion de la membrane (46A) en un signal électrique de pression de service.

2. Capteur de pression selon la revendication 1, **caractérisé en ce que** le moyen de raccordement est une soudure de verre (48A).

3. Capteur de pression selon la revendication 1 ou 2, **caractérisé par** une sonde de température disposée sur le capteur de mesure de pression dynamique (12A) et destinée à mesurer la température des gaz recyclés.

4. Capteur de pression selon l'une des revendications 1 à 3, **caractérisé en ce que** la plaque de flexion (28A) et/ou l'élément de support (24A) est formé(e) ou respectivement sont formés d'une plaque céramique ou respectivement de plaques céramiques dont le côté de surface de plaque (21A) ou respectivement les côtés de surface de plaque (21A) est ou respectivement sont au moins approximativement orienté(s) à angle droit par rapport à une direction d'écoulement (F) des gaz recyclés.

5. Capteur de pression selon l'une des revendications 1 à 4, **caractérisé en ce que** la chambre de mesure (50A) est placée dans un espace intérieur (214) du type trou borgne rempli de gaz recyclés.

6. Capteur de pression selon l'une des revendications 1 à 5, **caractérisé en ce qu'**un agencement de plaque (210) céramique comprenant l'élément de support (24A) et la plaque de flexion (28A) est reçu et fixé unilatéralement dans un élément de raccordement et de retenue (248), l'élément de raccordement et de retenue (248) étant, au moyen de contacts de connexion (250) portés par lui, immobilisé sur une carte de circuit imprimé (110A) disposée à l'intérieur du capteur de pression (10).

7. Capteur de pression selon l'une des revendications 1 à 6, **caractérisé en ce que** la chambre de mesure (50A) est vidée et fermée de façon étanche de tous côtés pour constituer le capteur de mesure de pression de service (16A) en tant que capteur de mesure de pression absolue.

8. Capteur de pression selon l'une des revendications 1 à 7, **caractérisé en ce que** la plaque de flexion (28A) est fixée sur l'élément de support (24A) au moyen d'une soudure de verre (26A) et dépasse librement de cette dernière.

9. Capteur de pression selon l'une des revendications 1 à 8, **caractérisé en ce que** les moyens de conversion (32A) et les autres moyens de conversion (52A) sont formés d'éléments piézoélectriques qui sont éventuellement protégés par une couche en soudure de verre (36, 26A, 48A).

10. Système de recyclage des gaz d'échappement, avec un capteur de pression selon l'une des revendications 1 à 9, **caractérisé en ce que** le capteur de mesure de pression dynamique (12A) et le capteur de mesure de pression de service (16A) font saillie dans un élément tubulaire (18A) conduisant les gaz recyclés en traversant un creux (102A) dans une tôle d'étanchéité (94A) en forme de cuvette, le creux (102A) étant enrobé de façon étanche par une résine synthétique (104A) ou une masse composite céramique, et la tôle d'étanchéité (94A) en forme de cuvette obturant une ouverture d'élément tubulaire (22A) côté paroi dans l'élément tubulaire (18A) en étant posée de façon étanche sur une bride de raccordement (58A) qui entoure, côté extérieur, l'ouverture d'élément tubulaire (22A).

11. Système de recyclage des gaz d'échappement selon la revendication 10, **caractérisé par** un logement (74A) mis en place de façon étanche sur la bride de raccordement (58A) et disposé en face de la tôle d'étanchéité (94A) en forme de cuvette, et qui, en face de la bride de raccordement (58A), est obturé de façon étanche par un couvercle (78A) formé de préférence en métal.

12. Système de recyclage des gaz d'échappement selon la revendication 11, **caractérisé en ce qu'**un circuit électronique d'amplification (70A) destiné au traitement du signal de pression dynamique et du signal de pression de service est disposé dans le logement (74A) entre la tôle d'étanchéité (94A) en forme de cuvette et le couvercle (78A).

13. Système de recyclage des gaz d'échappement selon la revendication 12, **caractérisé en ce que**, sur la plaque de flexion (28A) et sur la membrane (50A), il est disposé des pistes conductrices (54) destinées à la transmission du signal de pression dynamique en provenance des moyens de conversion (32A) et du signal de pression de service en provenance des autres moyens de conversion (52A) vers le circuit électronique d'amplification (70A).

14. Système de recyclage des gaz d'échappement selon la revendication 12 ou 13, **caractérisé en ce que** le logement (74A) présente une prise de courant (76A) avec des contacts de prise de courant (116A), les contacts de prise de courant (116A) étant connectés électriquement au circuit électronique d'amplification (70A) et pouvant fournir des signaux de sortie en fonction du signal de pression dynamique et du signal de pression de service.
